# EUROPÄISCHE PATENTSCHRIFT

(11) **EP 0 596 292 B1**
(45) Veröffentlichungstag und Bekanntmachung des Hinweises auf die Patenterteilung: **31.07.1996**
(21) Anmeldenummer: 93116606.0
(22) Anmeldetag: 14.10.1993
(51) Int. Cl.: C09B 5/62, C07D 221/18

(54) **Quaterrylentetracarbonsäureimide**
Quaterrylene tetracarboxylic imides
Imides de l'acide quaterrylènetétracarboxylique

(30) Priorität: 31.10.1992 DE 4236885
(43) Veröffentlichungstag der Anmeldung: 11.05.1994
(73) Patentinhaber: BASF Aktiengesellschaft, 67063 Ludwigshafen (DE)
(72) Erfinder: Muellen, Klaus, Prof. Dr., D-50939 Koeln (DE); Quante, Heribert, D-50823 Koeln (DE)

(56) Entgegenhaltungen:
- DYES AND PIGMENTS Bd. 16, Nr. 1 , Januar 1991 , BARKING GB Seiten 19 - 25 Y.NAGAO ET AL 'synthesis and properties of N-alkylbromoperylene-3,4-dicarboximides'
- CHEMISCHE BERICHTE Bd. 124, Nr. 9 , September 1991 , WEINHEIM DE Seiten 2091 - 2100 K.-H. KOCH ETAL. 'synthesis of tetraalkyl-substituted oligo(1,4-naphthylene)s and cyclisation to soluble oligo(peri-naphthylene)s'
- CHEMICAL ABSTRACTS, vol. 66, no. 12, 20. März 1967, Columbus, Ohio, US; abstract no. 47291y, Y. NAGAI ET AL 'long quinone-type compounds. III. Synthesis of 3,4(CO),13(CO ),14-dibenzoylenequaterrylene' Seite 4489 ;

## Beschreibung

Die vorliegende Erfindung betrifft neue Quaterrylene der Formel I 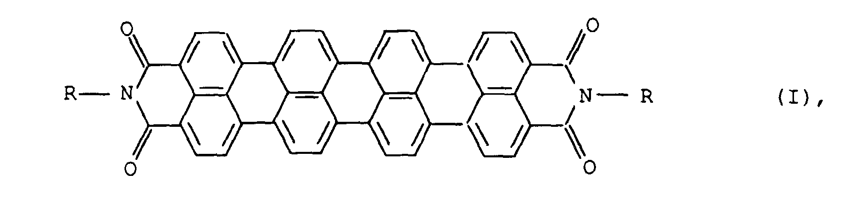 in der
die beiden Reste R gleich oder verschieden sind und unabhängig voneinander jeweils Wasserstoff, C₁-C₂₀-Alkyl, das durch 1 bis 4 Sauerstoffatome in Etherfunktion, 1 bis 4 Iminogruppen oder 1 bis 4 N-(C₁-C₄-Alkyl)iminogruppen unterbrochen sein kann, oder gegebenenfalls durch C₁-C₄-Alkyl substituiertes Phenyl bedeuten, Verfahren zu ihrer Herstellung sowie ihre Verwendung als Fluoreszenzfarbstoffe oder Pigmente.

Aus Chem. Ber., Band 81, Seiten 52 bis 63, 1948, ist der Grundkörper Quaterrylen bekannt. Er wird dort erhalten durch Erhitzen von Perylen in Benzol in Gegenwart von Aluminiumchlorid und Brom.

Weiterhin sind in Dyes and Pigments, Band 16, Seiten 19 bis 25, 1991, N-Alkylperylimide beschrieben, die über eine chemische Bindung einfach miteinander verknüpft sind (Biperylimide). Ihre Synthese erfolgt, ausgehend von den entsprechenden Bromperylimiden, über eine Ullmann-Reaktion, d. h. Umsetzung in Gegenwart von Kupferbronze. Dieser Reaktionstyp macht jedoch nur Biperylimide zugänglich, die mit kurzen Alkylketten (C₂-C₄) versehen sind.

Aufgabe der vorliegenden Erfindung war es nun, neue Quaterrylenverbindungen bereitzustellen. Außerdem sollten neue Syntheseverfahren bereitgestellt werden, die es erlauben, unterschiedlich substituierte Quaterrylene auf einfache Weise und in guter Ausbeute und Reinheit, ausgehend zunächst von den entsprechenden Halogenperylimiden und anschließend von den entsprechenden Biperylimiden, herzustellen.

Demgemäß wurden die eingangs näher bezeichneten Quaterrylene der Formel I gefunden.

Alle in Formel I auftretenden Alkylgruppen können sowohl geradkettig als auch verzweigt sein.

Wenn in Formel I Phenylgruppen auftreten, die durch C₁-C₄-Alkyl substituiert sind, so können sie im allgemeinen 1 bis 3 dieser Substituenten aufweisen.

Geeignete Reste sind beispielsweise Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Enzyklopädie der technischen Chemie, 4. Auflage, Band 7, Seiten 215 bis 217, sowie Band 11, Seiten 435 und 436), 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3,6,9-Trioxadecyl, 3,6,9-Trioxaundecyl, 3,6,9-Trioxadodecyl, 3,6,9,12-Tetraoxatridecyl, 3,6,9,12-Tetraoxatetradecyl, 2-Dimethylaminoethyl, 2- oder 3-Dimethylaminopropyl, 2- oder 4-Dimethylaminobutyl, 6-Methyl-3,6-diazaheptyl, 3,6-Dimethyl-3,6-diazaheptyl, 3,6-Diazoaoctyl, 3,6-Dimethyl-3,6-diazaoctyl, 9-Methyl-3,6,9-triazadecyl, 3,6,9-Trimethyl-3,6,9-triazadecyl, 3,6,9-Triazaundecyl, 3,6,9-Trimethyl-3,6,9-triazaundecyl, 12-Methyl-3,6,9,12-tetraazatridecyl, 3,6,9,12-Tetramethyl-3,6,9,12-tetraazatridecyl, 3,6,9,12-Tetraazatetradecyl, Phenyl, 2-, 3- oder 4-Methylphenyl, 2,4- oder 2,6-Dimethylphenyl, 2,4,6-Trimethylphenyl, 2-, 3- oder 4-Ethylphenyl, 2,4- oder 2,6-Diethylphenyl, 2,4,6-Triethylphenyl, 2-, 3- oder 4-Propylphenyl, 2,4- oder 2,6-Dipropylphenyl, 2,4,6-Tripropylphenyl, 2-, 3- oder 4-Isopropylphenyl, 2,4- oder 2,6-Diisopropylphenyl, 2,4,6-Triisopropylphenyl, 2-, 3- oder 4-Butylphenyl, 2,4- oder 2,6-Dibutylphenyl, 2,4,6-Tributylphenyl, 2-, 3- oder 4-Isobutylphenyl, 2,4- oder 2,6-Diisobutylphenyl, 2,4,6-Triisobutylphenyl, 2-, 3- oder 4-sec-Butylphenyl, 2,4- oder 2,6-Di-sec-butylphenyl oder 2,4,6-Tri-sec-butylphenyl.

Bevorzugt sind Quaterrylene der Formel I, in der die Reste R unabhängig voneinander jeweils Wasserstoff oder C₁-C₄-Alkyl bedeuten.

Bevorzugt sind weiterhin Quaterrylene der Formel I, in die Reste R unabhängig voneinander jeweils C₈-C₁₈-Alkyl oder Phenyl, das zweifach durch C₁-C₄-Alkyl substituiert ist, bedeuten.

Besonders bevorzugt sind Quaterrylene der Formel I, in der die Reste R unabhängig voneinander jeweils Wasserstoff, Methyl oder Ethyl bedeuten.

Besonders bevorzugt sind weiterhin Quaterrylene der Formel I, in der die Reste R unabhängig voneinander jeweils C₈-C₁₃-Alkyl oder Phenyl, das zweifach durch Propyl oder Isopropyl substituiert ist bedeuten.

Es wurde weiterhin gefunden, daß man die Quaterrylene der Formel I vorteilhaft erhielt, wenn man Biperylene der Formel II 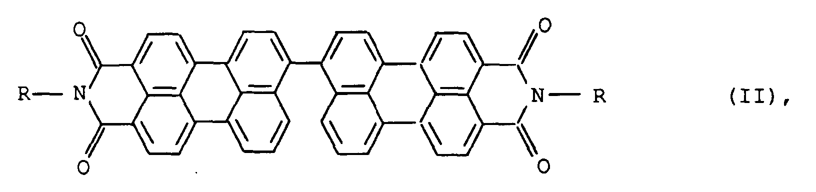 in der die Reste R jeweils die obengenannte Bedeutung besitzen, in einem alkalischen Reaktionsmedium mit einem Oxidationsmittel behandelt.

Geeignete Oxidationsmittel sind beispielsweise Glucose, Aluminiumchlorid, Eisen(III)chlorid, Mangandioxid, Palladium(II)acetat, Thallium(III)trifluoracetat, Thallium(III)acetat, Vanadiumtrifluoridoxid, Vanadiumtrichloridoxid, Cadmium(II)chlorid, Kupfer (11) chlorid oder Natriumformaldehydsulfoxylat.

Das erfindungsgemäße Verfahren wird vorteilhaft bei einer Temperatur von 60 bis 180°C, vorzugsweise 130 bis 160°C, durchgeführt, wobei man auch unter einer Schutzgasatmosphäre, beispielsweise Argon, arbeiten kann.

Als alkalisches Reaktionsmedium dient zweckmäßig eine Mischung aus einem Alkalihydroxid und einem C₁-C₄-Alkanol. Vorteilhaft verwendet man dabei Natrium- oder Kaliumhydroxid als Alkalihydroxid und Methanol, Ethanol, Propanol, Isopropanol, Butanol, Isobutanol oder sec-Butanol als Alkanol.

Bezogen auf das Gewicht vom Biperylen der Formel II verwendet man in der Regel 3000 bis 20000 Gew.-%, vorzugsweise 3000 bis 5000 Gew.-%, an Alkalihydroxid und 2000 bis 20000 Gew.-%, vorzugsweise 3000 bis 5000 Gew.-%, C₁-C₄-Alkanol.

Die vorzugsweise als Oxidationsmittel dienende Glucose wird in 10- bis 40-molarem, vorzugsweise 15- bis 25-molarem, Überschuß, jeweils bezogen auf 1 mol Biperylen der Formel II, angewendet.

Das neue Verfahren wird zweckmäßig so durchgeführt, daß man Biperylen II, Alkalihydroxid, C₁-C₄-Alkanol und Glucose vorlegt und gegebenenfalls unter einer Schutzgasatmosphäre auf die obengenannte Temperatur erhitzt. Nach Beendigung der Umsetzung, die in der Regel 1 bis 2 Stunden in Anspruch nimmt, wird abgekühlt, mit Mineralsäure, z. B. Salzsäure, angesäuert und das als Niederschlag anfallende Quaterrylen I abgesaugt, gewaschen und getrocknet. Durch Extraktion mit inerten Lösungsmitteln, z. B. Chloroform, Diethylether, Methyl-tert-butylether oder Toluol, können gegebenenfalls vorhandene Nebenprodukte vom Zielprodukt abgetrennt werden.

Es wurde weiterhin gefunden, daß die Herstellung von Biperylenen der Formel II vorteilhaft gelingt, wenn man ein Halogenperylimid der Formel III 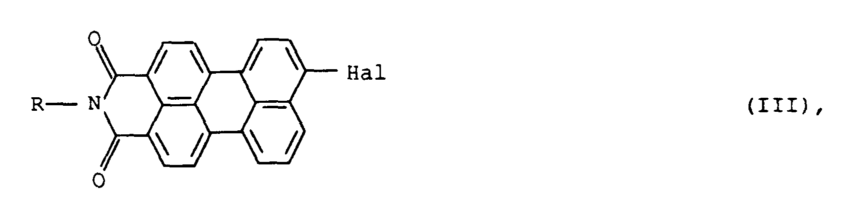 in der Hal Chlor oder Brom bedeutet, wobei Brom bevorzugt ist, und R die obengenannte Bedeutung besitzt, in einem inerten Verdünnungsmittel in Gegenwart eines metallorganischen Katalysators behandelt.

Geeignete inerte Verdünnungsmittel sind z. B. Carbonsäureamide, wie N,N-Dimethylformamid oder N,N-Dimethylacetamid, Ether, wie Dimethylether, 1,2-Dimethyloxyethan oder Tetrahydrofuran, oder Aromaten, wie Benzol, Toluol oder Xylol.

Geeignete metallorganische Katalysatoren sind z. B. Bis(1,5-cyclooctadien)nickel, Bis(triphenylphosphin)nickel(II)chlorid, Tetrakis(triphenylphosphin) nickel, Tetrakis(triphenylphosphin)palladium oder [1,2-Bis (diphenylphosphino)ethan]nickel (II) chlorid.

Die Verwendung von nickelorganischen Katalysatoren ist bevorzugt.

Es ist auch möglich, die Katalysatoren in situ zu erzeugen. Zur Anwendung können dabei Metallsalze oder -verbindungen, gegebenenfalls Oxidations- oder Reduktionsmittel sowie die entsprechenden Liganden gelangen. Geeignete Liganden sind z. B. Triphenylphosphin, Cyclooctadien, Bipyridyl, Trifluorphosphin, η-, δ- oder π-gebundene Olefine, Cycloolefine, Aromaten oder Antiaromaten, Wasserstoff, Carbonyle oder Halogene.

Das erfindungsgemäße Verfahren wird vorteilhaft bei einer Temperatur von 40 bis 80°C, vorzugsweise 60 bis 65°C, durchgeführt, wobei man auch unter einer Schutzgasatmosphäre, beispielsweise Argon, arbeiten kann.

Bezogen auf das Gewicht des Bromperylimids III, verwendet man in der Regel 2000 bis 10000 Gew.-%, vorzugsweise 4000 bis 5000 Gew.-%, an inertem Verdünnungsmittel und 30 bis 80 Gew.-%, vorzugsweise 45 bis 55 Gew.-%, an organischem Nickelkomplex.

Das neue Verfahren wird zweckmäßig so durchgeführt, daß man Halogenperylimid III, inertes Verdünnungsmittel und den metallorganischen Katalysator vorlegt und gegebenenfalls unter einer Schutzgasatmosphäre auf die obengenannte Temperatur erhitzt. Nach Beendigung der Umsetzung, die in der Regel 36 bis 48 Stunden in Anspruch nimmt, wird das Reaktionsgemisch abgekühlt, in Wasser, das gegebenenfalls noch Methanol enthalten kann, gegeben und mit Mineralsäure, z. B. Salzsäure, angesäuert. Das als Niederschlag anfallende Zielprodukt der Formel II wird dann abgesaugt, gewaschen und getrocknet.

Die neuen Quaterrylene der Formel I eignen sich vorteilhaft als Pigmente oder Fluoreszenzfarbstoffe. Sie können weiterhin auch als Photoleiter verwendet werden.

Als Pigmente eignen sich insbesondere solche Quaterrylene der Formel I, in der die Reste R unabhängig voneinander jeweils Wasserstoff oder C₁-C₄-Alkyl bedeuten.

Als Fluoreszenzfarbstoffe eignen sich insbesondere solche Quaterrylene der Formel I, in der die Reste R unabhängig voneinander jeweils C₈-C₁₈-Alkyl oder Phenyl, das zweifach durch C₁-C₄-Alkyl substituiert ist, bedeuten.

Die folgenden Beispiele sollen die Erfindung näher erläutern.

### Beispiel 1

10 g (25 mmol) 3,4:9,10-Perylentetracarbonsäuredianhydrid und 56,6 g (0,3 mol) Dodecylamin wurden in einer Mischung aus 600 ml Propanol und 400 ml Wasser gelöst. Man ließ das Reaktionsgemisch 7 Stunden bei 60 bis 65°C rühren. Nach dem Abkühlen wurde durch Zugabe von konz. Salzsäure angesäuert und der gebildete Niederschlag abfiltriert. Man wusch gründlich mit Wasser nach und trocknete unter vermindertem Druck. Das entstandene Gemisch aus Perylentetracarbonsäurediimid (ca. 20 Gew.-%) und 3,4:9,10-Perylentetracarbonsäure-3,4-anhydrid-9,10-imid (ca. 80 Gew.-%) kann direkt für den nächsten Reaktionsschritt verwendet werden.

### Beispiel 2

12,5 g eines Gemisches aus Beispiel 1 und 250 ml 12 gew.-%ige Kalilauge wurden im Autoklaven 18 Stunden auf 220 bis 230°C erhitzt. Das abgekühlte Reaktionsgemisch wurde filtriert und der Niederschlag mit Wasser neutral gewaschen. Nach dem Trocknen unter vermindertem Druck wurde das Produkt mit Diethylether extrahiert. Das Lösungsmittel wurde entfernt, der Rückstand mit wenig Methylenchlorid aufgenommen und mit 400 ml Methanol versetzt. Der Niederschlag wurde filtriert, mit Methanol gewaschen und unter vermindertem Druck getrocknet. Man erhielt N-Dodecyl-3,4-perylendicarbonsäureimid als rotes Pulver in einer Ausbeute von 80 % (bezogen auf Perylentetracarbonsäure-3,4-anhydrid-9,10-imid). Der Schmelzpunkt beträgt 178 bis 179°C.

### Beispiel 3

2,5 g (5,1 mmol) des Perylendicarbonsäureimids aus Beispiel 2 wurden in 750 ml Methylenchlorid gelöst. Nach Zugabe einer Spatelspitze Eisenpulver tropfte man bei Raumtemperatur innerhalb von 15 Minuten 8 g (50 mmol) Brom in 50 ml Methylenchlorid zu. Die Temperatur wurde langsam gesteigert, und man ließ das Reaktionsgemisch 3 Stunden unter Rückfluß rühren. Nach dem Abkühlen entfernte man das Lösungsmittel am Rotationsverdampfer, nahm den Rückstand in wenig Methylenchlorid auf und versetzte mit 500 ml Methanol. Man ließ die Lösung über Nacht im Kühlschrank stehen, filtrierte vom Niederschlag ab, wusch diesen gründlich mit Methanol nach und trocknete unter vermindertem Druck. Man erhielt die Bromverbindung der Formel 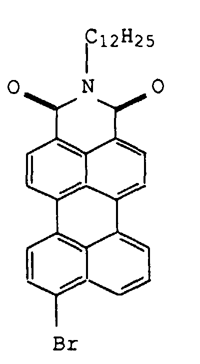 (Schmelzpunkt: 161°C) als rotes Pulver in einer Ausbeute von 92 %.

### Beispiel 4

In einem Schlenkkolben wurden unter Argon 180 mg (0,67 mmol) Bis(1,5-Cyclooctadien)nickel, 105 mg (0,67 mmol) 2,2'-Bipyridyl und 600 mg (5,6 mmol) 1,5-Cyclooctadien in 15 ml abs. N,N-Dimethylformamid gelöst. Anschließend wurden im Argongegenstrom 382 mg (0,67 mmol) N-Dodecyl-9-bromperylen-3,4-dicarboximid (aus Beispiel 3) hinzugegeben. Das Reaktionsgemisch wurde 36 Stunden bei 60 bis 65°C gerührt, wobei sich ein rotbrauner Niederschlag bildete. Nach Beendigung der Reaktion ließ man auf Raumtemperatur abkühlen und gab das Gemisch in eine Lösung aus 30 ml konz. Salzsäure, 30 ml Wasser und 60 ml Methanol. Der Niederschlag wurde abgesaugt, mit Wasser, gesättigter wäßriger Kaliumcarbonatlösung, Wasser und Methanol gewaschen. Nach dem Trocknen unter vermindertem Druck erhielt man ein rotes Produkt der Formel 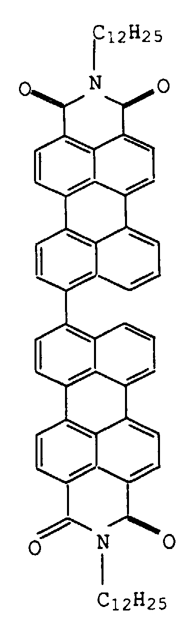 (Ausbeute: 90 %). Das Produkt zeigte bis 300°C keinen Schmelzpunkt.

### Beispiel 5

100 g pulverisiertes Kaliumhydroxid, 100 ml Ethanol, 4 g Glucose und 1 g (1 mmol) N,N'-Didodecyl-1,1'-diperylenyl-6,7,:6',7'-tetracarbonsäurediimid (aus Beispiel 4) wurden unter Argon 75 Minuten auf 150 bis 160°C (Badtemperatur) erhitzt. Nach dem Abkühlen gab man die Reaktionsmischung in 600 ml Wasser. Nach Zugabe von 200 ml konz. Salzsäure ließ man den Niederschlag im Kühlschrank ausflocken (3 bis 4 Stunden). Man filtrierte und wusch den Feststoff mit gesättigter wäßriger Kaliumcarbonatlösung, Wasser, Methanol und Ether nach. Durch Extraktion mit Chloroform wurden die löslichen Nebenprodukte entfernt, und es verblieb das Quaterrylentetracarbonsäurediimid der Formel 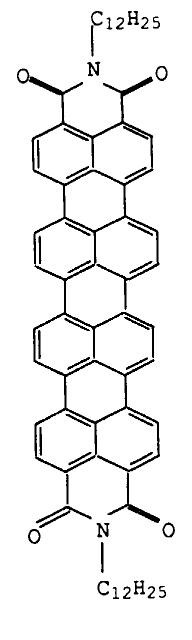 als schwarzes Pulver, das bis 300°C keinen Schmelzpunkt zeigt. Die Ausbeute betrug 40 %.

Physikalische Daten:
- FD-MS:: (m/e) 975,3 (M⁺)
- UV/VIS:: λₘₐₓ = 791 nm (CHCl₃)
- Festkörper-C¹³-NMR:: Carbonyl-C: δ = 161.54 ppm
Aromatische-C: breites Signal mit Maximum bei δ = 128.99 ppm
Alkyl-C:C₁₂ δ = 14,42 ppm
C₁₁ δ = 23.43 ppm
C₂-C₁₀ δ = 30.75 ppm
C₁ δ = 40.60 ppm

## Patentansprüche

1. Quaterrylene der Formel I 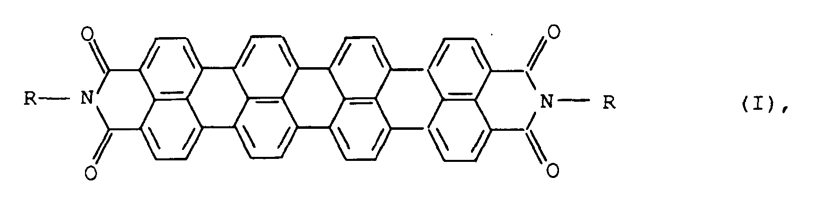 in der
die beiden Reste R gleich oder verschieden sind und unabhängig voneinander jeweils Wasserstoff, C₁-C₂₀-Alkyl, das durch 1 bis 4 Sauerstoffatome in Etherfunktion, 1 bis 4 Iminogruppen oder 1 bis 4 N-(C₁-C₄-Alkyl)iminogruppen unterbrochen sein kann, oder gegebenenfalls durch C₁-C₄-Alkyl substituiertes Phenyl bedeuten.

2. Quaterrylene nach Anspruch 1, dadurch gekennzeichnet, daß die Reste R unabhängig voneinander jeweils Wasserstoff oder C₁-C₄-Alkyl bedeuten.

3. Quaterrylene nach Anspruch 1, dadurch gekennzeichnet, daß die Reste R unabhängig voneinander jeweils C₈-C₁₈-Alkyl oder Phenyl, das zweifach durch C₁-C₄-Alkyl substituiert ist, bedeuten.

4. Verfahren zur Herstellung von Quaterrylenen gemäß Anspruch 1, dadurch gekennzeichnet, daß man Biperylene der Formel II 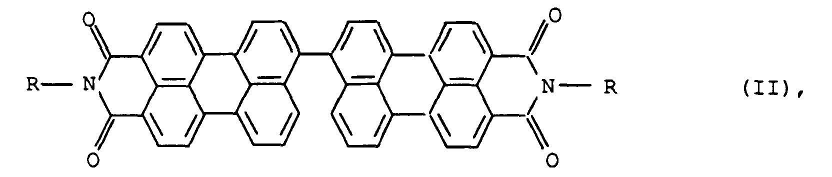 in der die Reste R jeweils die in Anspruch 1 genannte Bedeutung besitzen, in einem alkalischen Reaktionsmedium mit einem Oxidationsmittel behandelt.

5. Verfahren zur Herstellung von Biperylenen der Formel II 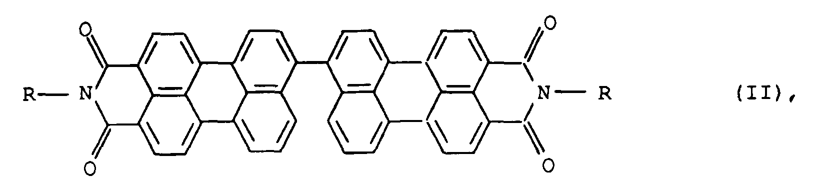 in der die Reste R jeweils die in Anspruch 1 genannte Bedeutung besitzen, dadurch gekennzeichnet, daß man ein Halogenperylimid der Formel III 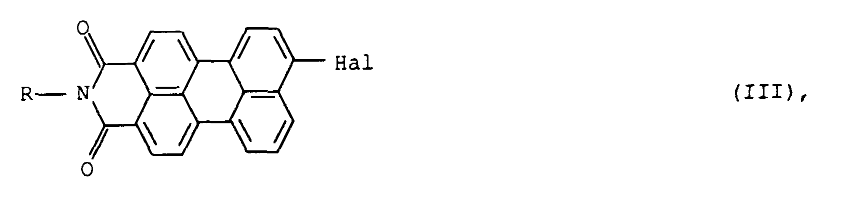 in der Hal Chlor oder Brom bedeutet und R die in Anspruch 1 genannte Bedeutung besitzt, in einem inerten Verdünnungsmittel in Gegenwart eines metallorganischen Katalysators behandelt.

6. Verwendung der Quaterrylene gemäß Anspruch 1 als Pigmente oder als Fluoreszenzfarbstoffe.

## Claims

1. Quaterrylenes of the formula I 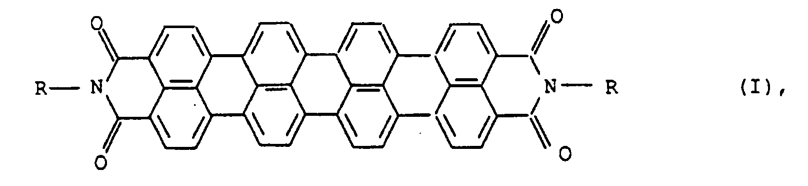 where the two radicals R are identical or different and are independently of each other hydrogen, C₁-C₂₀-alkyl, which may be interrupted by from 1 to 4 oxygen atoms in ether function, by from 1 to 4 imino groups or by from 1 to 4 N-(C₁-C₄-alkyl)imino groups, or unsubstituted or C₁-C₄-alkyl-substituted phenyl.

2. Quaterrylenes as claimed in claim 1, wherein the radicals R are independently of each other hydrogen or C₁-C₄-alkyl.

3. Quaterrylenes as claimed in claim 1, wherein the radicals R are independently of each other C₈-C₁₈-alkyl or C₁-C₄-alkyl-disubstituted phenyl.

4. A process for preparing quaterrylenes as claimed in claim 1, which comprises treating biperylenes of the formula II 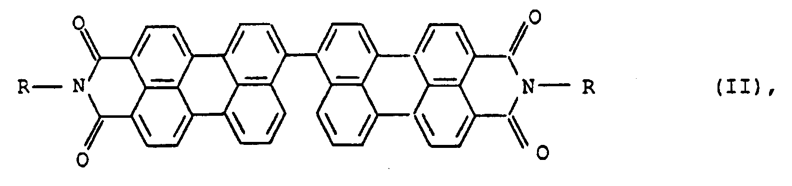 where the radicals R are each as defined in claim 1, with an oxidizing agent in an alkaline reaction medium.

5. A process for preparing biperylenes of the formula II 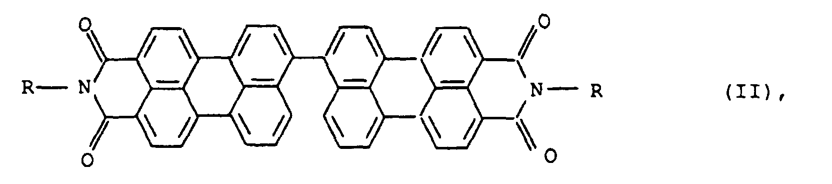 where the radicals R are each as defined in claim 1, which comprises treating a haloperylimide of the formula III 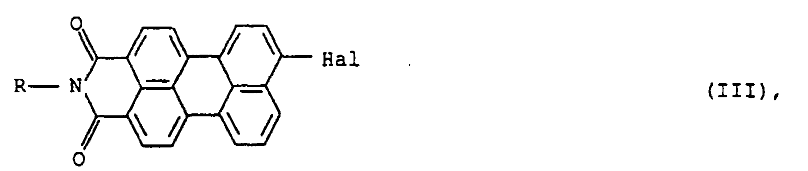 where Hal is chlorine or bromine and R is as defined in claim 1, in an inert diluent in the presence of an organometallic catalyst.

6. The use of the quaterrylenes of claim 1 as pigments or fluorescent dyes.

## Revendications

1. Quaterrylènes de formule I 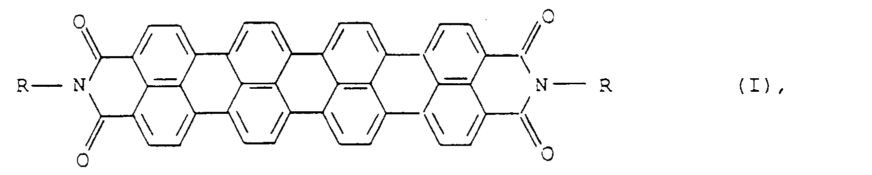 dans laquelle
les deux restes R sont identiques ou différents et représentent chacun, indépendamment l'un de l'autre, un atome d'hydrogène, un reste alkyle en C₁-C₂₀ qui peut être interrompu par 1 à 4 atomes d'oxygène en fonction éther, par 1 à 4 groupements imino ou par 1 à 4 groupements N-(alkyl en C₁-C₄)imino, ou un reste phényle éventuellement substitué par un groupement alkyle en C₁-C₄.

2. Quaterrylènes selon la revendication 1, caractérisés en ce que les restes R représentent chacun, indépendamment l'un de l'autre, un atome d'hydrogène ou un reste alkyle en C₁-C₄.

3. Quaterrylènes selon la revendication 1, caractérisés en ce que les restes R représentent chacun, indépendamment l'un de l'autre, un reste alkyle en C₈-C₁₈ ou phényle qui est substitué deux fois par des groupements alkyle en C₁-C₄.

4. Procédé de préparation de quaterrylènes selon la revendication 1, caractérisé en ce que l'on traite des biperylènes de formule II 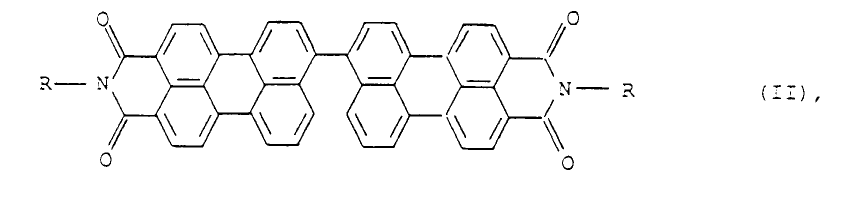 dans laquelle les restes R ont chacun les significations données dans la revendication 1, par un oxydant dans un milieu réactionnel alcalin.

5. Procédé de préparation de bipérylènes de formule II 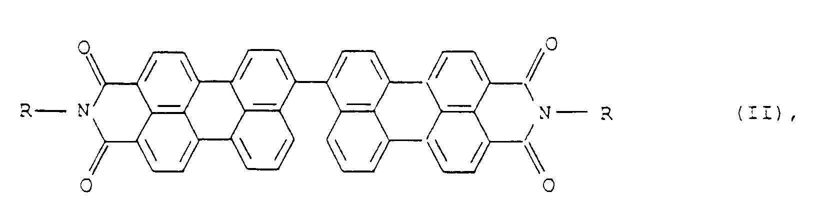 dans laquelle les restes R ont chacun les significations données dans la revendication 1, caractérisé en ce que l'on traite un pérylimide halogéné de formule III 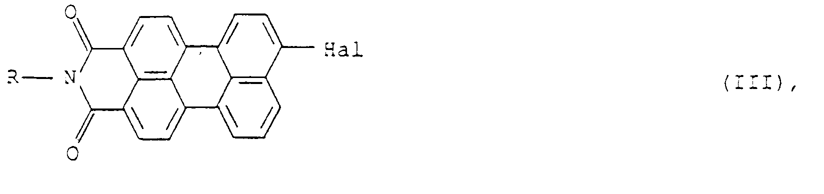 dans laquelle Hal représente un atome de chlore ou de brome et R a la signification indiquée dans la revendication 1, dans un diluant inerte en présence d'un catalyseur organométallique.

6. Utilisation des quaterrylènes selon la revendication 1 comme pigments ou comme colorants fluorescents.
